# EUROPÄISCHE PATENTANMELDUNG

(11) **EP 0 665 669 A2**
(43) Veröffentlichungstag der Anmeldung: **02.08.1995**
(21) Anmeldenummer: 95100507.3
(22) Anmeldetag: 16.01.1995
(51) Int. Cl.: H04L 29/06

(54) **Verfahren zur Adressierung abgesetzter Einheiten in einem optischen TDM/TDMA-System**

(30) Priorität: 31.01.1994 DE 4402826
(71) Anmelder: SIEMENS AKTIENGESELLSCHAFT, D-80333 München (DE)
(72) Erfinder: Singer, Josef, Dipl.-Ing., D-86807 Buchloe (DE)

(57) **Zusammenfassung**

Bei optischen Teilnehmeranschlußsystemen ist die Zentrale (OLT) über einen sich in eine passive optische Baumstruktur aufspaltenden Lichtwellenleiter (LWL) mit den einzelnen abgesetzten Einheiten verbunden, die ihre Übertraungssignale im Burstbetrieb an die Baumstruktur abgeben. Den abgesetzten Einheiten ist eine Adresse zugeordnet, wobei es bei fehlerhafter Zuordnung einer Adresse an zwei abgesetzte Einheiten (ONU) zu Übertragungsstörungen kommen kann. Erfindungsgemäß wird deshalb vor Anschaltung der abgesetzten Einheit an das System der betreffenden Einheit eine erste Adresse zugeordnet und anschließend die Einmessung durchgeführt. Nach der Einmessung wird eine zweite Adresse vergeben, die nicht mit einer ersten Adresse einer anderen abgesetzten Einheit übereinstimmt.

## Beschreibung

Die Erfindung betrifft ein Verfahren entsprechend dem Oberbegriff des Anspruchs 1.

Ein Verfahren der vorgenannten Art ist aus "Optische Übertragungstechnik für flächendeckende Teilnehmeranschlüsse" Hefte 04/1992 (April), 9/1992 (September) und 10/1992 (Oktober) der Zeitschrift "Der Fernmeldeingenieur" (Verlag für Wissenschaft und Leben, Georg Heidecker GmbH Erlangen) insbesondere Seiten 6, 11 bis 13 des Heftes 10/1992 bekannt.

Bei optischen Übertragungssystemen für flächendeckende Teilnehmeranschlüsse wird häufig von dem sogenannten TDM/TDMA-Funktionsprinzip Gebrauch gemacht. Dabei sendet eine Zentrale im Zeitmultiplex-(TDM)-Betrieb Nachrichten-und Steuersignale über ein passives optisches Netzwerk , das sich in Form einer Lichtwellenleiter-Baumstruktur in Richtung von der Zentrale zum Teilnehmer aufspaltet, wahrend in der Gegenrichtung in einer vorgewählten Reihenfolge die teilnehmernahen abgesetzten Einheiten im TDMA-Betrieb, also in bestimmten Zeitschlitzen Zeitmultiplexsignale enthaltende Signalbursts an die Zentrale zurücksenden. Dabei können für die Übertragung der von der Zentrale stammenden Signale und für die Gegenrichtung getrennte Lichtwellenleiter-Baumstrukturen verwendet werden, die Grundstruktur eines derartigen Netzes ist in "Der Fernmeldeingenieur" Heft 4/1992 (April) Seite 10, Bild 5.1 dargestellt. Da die Zentrale ständig an alle abgesetzten Einheiten alle Übertragungssignale aussendet, sind die für die einzelnen abgesetzten Einheiten vorgesehenen Übertragungssignale mit einer Adresse versehen, auf die die abgesetzte Einheit am Ort eingestellt worden ist. Bei einer derartigen Einstellung kann es nun insbesondere beim weiteren Ausbau des Netzes vorkommen, daß einer neuen abgesetzten Einheit in fehlerhafter Weise eine Adresse zugeordnet wird, die bereits an eine andere abgesetzte Einheit vergeben wurde. In diesem Falle wurden beide abgesetzte Einheiten auf Kommandos der Zentrale in gleicher Weise reagieren und beispielsweise im gleichen Zeitschlitz Signale an die Zentrale zurticksenden. Da die Laufzeit von der neuen abgesetzten Einheit zur Zentrale gegenüber der der ersten abgesetzten Einheit unterschiedlich sein kann, können nicht nur Störungen in der Übertragung der Signale dieser beiden abgesetzten Einheiten, sondern auch von anderen abgesetzten Einheiten auftreten.

Die Aufgabe bei der vorliegenden Erfindung besteht also darin, das eingangs genannte Verfahren so zu verbessern, daß bei einer in fehlerhafter Weise an zwei oder mehr abgesetzte Einheiten vergebenen Adresse keine Störungen im Betrieb auftreten können.

Erfindungsgemäß wird die Aufgabe durch ein Verfahren der eingangs genannten Art gelöst, das durch die im Kennzeichen des Patentanspruchs 1 enthaltenen Merkmale weitergebildet ist. Das erfindungsgemäße Verfahren beinhaltet in vorteilhafter Weise eine hohe Flexibilität, so daß Erweiterungen des optischen Übertragungssystems jederzeit störungsfrei möglich sind und außerdem eine automatische Reaktion auf Unterbrechungen der Nachrichtenübertragung zwischen der Zentrale und einer oder mehrerer abgesetzten Einheiten erfolgt.

Bevorzugte Ausbildungen des erfindungsgemäßen Verfahrens sind in den Patentansprüchen 2 und 3 beschrieben.

Die Erfindung soll im folgenden anhand eines in der Zeichnung dargestellten Ausführungsbeispiels näher erläutert werden. Dabei zeigt:

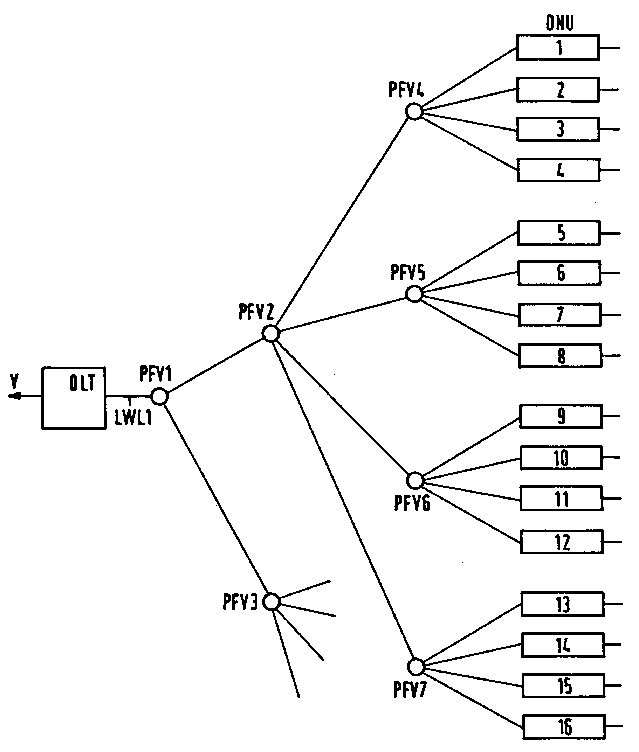

- Figur 1: die Grundstruktur eines optischen Netzes mit TDM/TDMA-Betrieb zwischen einer Zentrale und einer Vielzahl abgesetzter Einheiten.

In der Figur 1 ist die auch als Optical Line Termination bezeichnete Zentrale OLT über Umsetzer und Regelschaltungen mit einer Vermittlung V verbunden, wobei diese Verbindung insbesondere auf elektrischem Wege erfolgt. Die Zentrale OLT enthalt einen Laserdiodensender LDS, der im Dauerbetrieb an das angeschlossene passive optische Netzwerk Zeitmultiplexsignale abgibt, die Nachrichten und Steuerbefehle für die auch als Optical Network Unit bezeichneten abgesetzten Einheiten ONU1...16 enthalten, wobei den Signalen für die abgesetzten Einheiten jeweils die Adresse für diese Einheit vorangestellt ist. An den Laserdiodensender der Zentrale OLT istdabei über einen ersten Lichtwellenleiter LWL1 ein erster passiver Faserverzweiger PFV1 angeschlossen,an den zwei weitere Lichtwellenleiter als Verbindungen zum zweiten und dritten passiven Faserverstärker PFV2, PFV3, angeschlossen sind. Bei diesen Verzweigern handelt es sich um 4-fach Verzweiger, so daß an den zweiten Faserverzweiger PFV2 eine vierter bis siebenter Faserverzweiger PFV4...7 angeschlossen sein können, die nicht dargestellten weiteren Verzweigungen nach dem dritten Faserverzweiger PFV3 entsprechen denen nach dem zweiten Faserverzweiger PFV2. Auch bei den passiven Faserverzweigern PFV4...7 handelt es um 4-fach Verzweiger, so daß an den vierten Phaserverzweiger PFV4 die erste bis vierte abgesetzte Einheit ONU1..4, an den fünften passiven Faserverzweiger PFV5 die fünfte bis achte abgesetzte Einheit ONU5..8, an den sechsten passiven Faserverzweiger PFV6 die neunte bis elfte abgesetzte Einheit ONU9..11 und an den siebenten passiven Faserverzweiger PFV7 die 13...16. abgesetzte Einheit ONU13...16 angeschlossen sein können. Im Hinblick auf die Verringerung der Kosten sind die abgesetzten Einheiten ONU nicht einzelnen Teilnehmern direkt zugeordnet, sondern es sind jeweils mehrere Teilnehmer, beispielsweise über herkömmliche Kupferleitungen, mit einer gemeinsamen abgesetzten Einheit verbunden, in der sich dann neben den opto-elektrischen Wandlern auch Wandler befinden, die die empfangenen Zeitmultiplexsignale in für den Teilnehmer verständliche Signale umformen.

Entsprechend dem erfindungsgemäßen Verfahren wird den abgesetzten Einheiten bei der Einschaltung in das TDM/TDMA-System, beispielsweise beim Aufbau oder nach einer Reparatur eine erste Adresse A von beispielsweise "003" aus einem ersten Adressenvorrat An von "001" bis "032" zugeordnet. Im Hinblick auf den beabsichtigten Burstbetrieb erfolgt anschließend auf ein Steuersignal der Zentrale OLT hin die Aussendung eines Einmeßsignals. Aus der sich ergebenden Verzögerung bis zum Eintreffen dieses Signals in der Zentrale wird die Laufzeit zwischen der abgesetzten Einheit und der Zentrale und damit die notwendige Verzögerung der Aussendung von Signalbursts für die betreffende abgesetzte Einheit ermittelt. Dabei kann die Übertragung der Steuersignale von der Zentrale OLT zu den abgesetzten Einheiten über die dargestellte Baumstruktur oder über eine zweite Baumstruktur erfolgen, wobei die erste Baumstruktur beispielsweise nur für die Übertragung von der Zentrale OLT zu den abgesetzten Einheiten ONU und die zweite Baumstruktur für die identisch aufgebaute Gegenrichtung verwendet wird. Nach der Ermittlung der notwendigen Verzögerungszeit in der Zentrale OLT wird diese Verzögerungszeit an die betreffende abgesetzte Einheit übermittelt und dort eingestellt. Alternativ kann auch die Differenz zwischen der längsten Laufzeit und der Laufzeit der betreffenden abgesetzten Einheit in der Zentrale eingestellt werden, so daß dann das Startsignal für die betreffende abgesetzte Einheit bei dieser entsprechend vorverzögert ankommt.

Das Einmeßverfahren kann nun, falls erforderlich, für weitere abgesetzte Einheiten durchgeführt werden, anschließend übermittelt die Zentrale an alle neu eingemessenen abgesetzten Einheiten zweite Adressen B, die aus einem zweiten, mit dem ersten nicht verwechselbaren Adressenvorrat Bn stammen und auf die sich die abgesetzten Einheiten automatisch einstellen. Die zweiten Adressen werden dabei so gebildet, daß zur ersten Adresse A ein konstanter Wert addiert wird, der beispielsweise gleich der Anzahl aller möglichen Teilnehmeranschlüsse der Lichtwellenleiter-Baumstruktur ist. Im vorliegenden Falle wären 32 Anschlüsse möglich, so daß die vierte abgesetzte Einheit ONU4 die zweite Adresse "036" erhalten wurde. Im folgenden Betrieb werden alle Nachrichten und Steuersignale an die vierte abgesetzte Einheit ONU4 unter der neuen Adresse 036 übermittelt.

Nach der Behebung einer zeitweilig unterbrochenen Verbindung zwischen der Zentrale OLT und wenigstens einer der abgesetzten Einheiten ONU sendet die Zentrale OLT einen Rücksetzbefehl an alle betroffenen abgesetzten Einheiten, durch den deren zweite Adresse gelöscht und die erste Adresse aktiviert wird. Anschließend erfolgt eine erneute Einmessung der betroffenen abgesetzten Einheiten und die erneute Vergabe der zweiten Adresse.

Bei der Einschaltung einer neuen abgesetzten Einheit ONUy kann es nun vorkommen, daß deren erste Adresse A in fehlerhafter Weise mit einer bereits vergebenen ersten Adresse A einer anderen eingemessenen abgesetzten Einheit übereinstimmt. Die Zentrale erkennt nun, daß für diese erste Adresse bereits ein Einmeßverfahren erfolgt ist und eine zweite Adresse vergeben wurde, worauf die Zentrale OLT auf die Signale der neuen abgesetzten Einheit mit der falschen Adresse nicht reagiert.Damit ist eine Einmessung der neuen abgesetzten Einheit und ein sich anschließender fehlerhafter Betrieb nicht möglich,eine Beeinträchtigung der Übertragung der bereits eingemessenen abgesetzten Einheiten wird so verhindert. Da somit ein ordnungsgemäßer Betrieb der neuen abgesetzten Einheit nicht möglich ist, wird das mit der Einschaltung betraute Personal auf den Montagefehler hingewiesen.

## Patentansprüche

1. Verfahren zur Adressierung von, mit einer Zentrale über wenigstens eine, sich in eine Vielzahl von optischen Teilnehmeranschlüssen aufspaltende Lichtwellenleiterstruktur verbundenen abgesetzten Einheiten in einem TDM/TDMA-System, bei dem von der Zentrale im Zeitmultiplex- bzw. TDM-Betrieb mit einer Adresse versehene Nachrichten- und Steuersignale an die abgesetzten Einheiten ausgesendet und von diesen im TDMA-Betrieb Zeitmultiplexsignale in Form von Signalbursts an die Zentrale zurückgesendet werden und bei dem die abgesetzten Einheiten jeweils am Ort mit einer Adresse versehen werden,
**dadurch gekennzeichnet,**
daß bei der Einschaltung in das TDM/TDMA-System die betreffende abgesetzte Einheit (ONUx) am Ort mit einer ersten Adresse (A) aus einem ersten Adressenvorrat (An) versehen und von der Zentrale (OLT) unter dieser Adresse (A) angesprochen wird,
daß anschließend die Laufzeit eines Signals zwischen der betreffenden abgesetzten Einheit (ONUx) und der Zentrale (OLT) und daraus die notwendige Verzögerung der Aussendung von Signalbursts nach Empfang eines entsprechenden Startsignals für die betreffende abgesetzte Einheit (ONUx) ermittelt und diese in der betreffenden abgesetzten Einheit eingestellt wird,
daß anschließend, gegebenenfalls nach Ermittlung der Verzögerungszeiten für weitere abgesetzte Einheiten, die Zentrale an alle eingemessenen abgesetzten Einheiten (ONUn) zweite Adressen (B) aus einem zweiten, mit dem ersten nicht verwechselbaren Adressenvorrat (Bn) übermittelt und im folgenden Betrieb Nachrichten- und Steuerbefehle an die betreffenden abgesetzten Einheiten ausschließlich unter der zweiten Adresse (B) aussendet,
daß nach einer Unterbrechung der Verbindung zwischen der Zentrale (OLT) und wenigstens einer abgesetzten Einheit (ONU) die Zentrale (OLT) nach Aussendung eines Rücksetzbefehls an alle von der Unterbrechung betroffenen abgesetzten Einheiten (ONUn) diese jeweils unter ihrer ersten Adresse (A) anspricht,
daß nach einer erneuten Einmessung der von der Unterbrechung betroffenen abgesetzten Einheiten (ONU) die Zentrale (OLT) wiederum zweite Adressen (B) aus dem zweiten Adressenvorrat (Bn) an die neu eingemessenen abgesetzten Einheiten (ONU) für den folgenden Betrieb übermittelt und
daß bei der Einschaltung einer neuen abgesetzten Einheit (ONUy), deren erste Adresse in fehlerhafter Weise mit der ersten Adresse (Ax) einer bereits eingemessenen abgesetzten Einheit (ONUy) übereinstimmt, an die neue abgesetzte Einheit (ONUy) von der Zentrale (OLT) keine Steuer- und Startsignale ausgesendet werden und keine Einmessung erfolgt.

2. Verfahren nach Anspruch 1,
**dadurch gekennzeichnet,**
daß die zweite Adresse (B) sich aus der ersten Adresse (A) durch eine feste Zuordnung, insbesondere durch Addition einer Konstanten zur ersten Adresse, ergibt.

3. Verfahren nach Anspruch 2,
**dadurch gekennzeichnet,**
daß die Konstante wenigstens gleich der Anzahl aller Anschlüsse für abgesetzte Einheiten (ONU) der Lichtwellenleiter-Baumstruktur ist.
